# EUROPÄISCHE PATENTSCHRIFT

(11) **EP 2 397 256 B1**
(45) Veröffentlichungstag und Bekanntmachung des Hinweises auf die Patenterteilung: **09.04.2014**
(21) Anmeldenummer: 11164509.9
(22) Anmeldetag: 03.05.2011
(51) Int. Cl.: B24C 1/04, B24C 9/00, B24C 11/00

(54) **Vorrichtung und Verfahren zum Schneiden eines beschichteten Werkstücks**
Device and method for cutting a coated workpiece
Dispositif et procédé destinés au découpage d'une pièce usinée revêtue

(30) Priorität: 16.06.2010 DE 102010030158
(43) Veröffentlichungstag der Anmeldung: 21.12.2011
(73) Patentinhaber: Bayerische Motoren Werke Aktiengesellschaft, 80809 München (DE)
(72) Erfinder: Donath, Norbert, 82343, Poecking (DE); Laude, Marc, 80339, München (DE)

(56) Entgegenhaltungen:
- EP-A1- 0 556 065
- EP-A1- 1 839 801
- US-A- 3 765 923
- US-A- 4 872 293

## Beschreibung

Die Erfindung betrifft ein Verfahren und eine Vorrichtung zum Schneiden eines beschichteten Werkstücks, insbesondere zum Schneiden von mit Korrosionsschutz beschichteten oder lackierten Metallstrukturen bzw. Metallblechen, wobei als Schneidmittel ein Fluidstrahl verwendet wird, der auf eine vorbestimmte Strahlgeschwindigkeit beschleunigt wird und mit vorbestimmter kinetischer Energie auf eine Oberfläche des zu schneidenden Werkstück gestrahlt wird, wodurch eine Schnittkante in dem Werkstück erzeugt wird.

Um den in der Automobilindustrie stetig steigenden Qualitätsanforderungen gerecht zu werden, werden ständig innovative Fertigungstechnologien sowie wirtschaftliche Lösungen gesucht. Zum Gewährleisten eines besseren Korrosionsschutzes werden bei der Fertigung von Karosserieteilen die Basisbleche mit einer Schutzschicht, beispielsweise aus Zink, beschichtet. Dabei werden überwiegend beschichtete Coils in verschiedenen Breiten und Dicken eingesetzt und dann die entsprechenden Formplatinen daraus geschnitten. In Folgeprozessen werden die Platinen zu geometrischen Bauteilen umgeformt und endbeschnitten. Aus den angefertigten Einzelteilen entsteht nach diversen Fügeoperationen eine vollständige Fahrzeugkarosse. Während dieses Herstellungsprozesses entstehen bedingt durch Schneid-und Schweißoperationen oder durch die Aufnahme der Karosseriehalbzeuge in Fügevorrichtungen an der Gesamtkarosserie eine Vielzahl an ungeschützten Sektionen, an denen die ursprüngliche Beschichtung geschädigt oder vollständig entfernt wurde.

Um diese Bereiche sowie die offenliegenden Schnittkanten, an denen das Rohmaterial unbeschichtet ist, wieder zu versiegeln, werden in einem speziellen Tauchverfahren die fertigen Rohkarosserien mit einem Korrosionsschutz beschichtet und versiegelt. Aussparungen und Beschnitte, die nach dem Beschichtungs- und Versieglungsprozess, bedingt durch Sonder- oder Zusatzausstattungen eingebracht werden, stellen jedoch ein besonderes Risiko dar, da die ursprüngliche Beschichtung unterbrochen wird.

Nach dem oben beschriebenen Verfahrensschritt der Beschichtung, beispielsweise durch kathodischen Tauchlackierung (KTL), ist es möglich, mittels Laserschneiden in einer fertig lackierten Fahrzeugkarosse Ausschnitte und Durchbrüche einzubringen, ohne dass hierbei die Beschichtung wesentlich beschädigt wird. Bei dieser Technologie wird ein extrem kurz gepulster Laserstrahl verwendet, so dass ein zu schneidendes Blech von dem Schneidstrahl nur noch unerheblich aufgeheizt wird und der Lack im Schneidbereich kaum in Mitleidenschaft gezogen wird.

Eine weitere Alternative zu dem Laserstrahlschneiden stellen bekannte, kalte Schneidverfahren, wie beispielsweise Wasserstrahlschneiden dar. Solche Verfahren sind im Stand der Technik bekannt, beispielsweise aus den Druckschriften US 2,985,050, US 3,212,378 sowie der DE 694 27 166 T2.

Aus der US 3,765,923 ist ein Verfahren und eine Zusammensetzung zur Oberflächenbehandlung, insbesondere von metallischen Oberflächen bekannt, bei dem gleichzeitig ein korrosionsschützendes Metall aufgetragen wird.

Die EP 0556 065 zeigt ein Beschichtungsmaterial in Pulverform, bei dem jedes Partikel aus einem Eisenkern, der mit einer Zinkbeschichtung bedeckt ist, besteht. Diese Partikel werden einer thermischen Behandlung unterzogen zwischen 300 und 700°C, so dass die Zinkbeschichtung eine Vickershärte von 60 bis 370 aufweist.

Aus der 4,872,293 ist eine Wasserstrahlschneideeinrichtung bekannt, der mit Hochdruck beaufschlagtes Wasser und eine abrasive Lösung zugeführt werden, um mit Hilfe des Wasserstrahls Metallbleche zu schneiden.

Bei diesen aus der Praxis bekannten Verfahren, von denen die Erfindung ausgeht, besteht das oben beschriebene Problem der ungeschützten Schnittkanten, so dass die Schnittfläche jeweils in einem zusätzlichen Arbeitsschritt versiegelt oder entsprechend geschützt werden muss.

Demgegenüber liegt der Erfindung die Aufgabe zugrunde, ein Verfahren wie vorstehend beschrieben so weiterzubilden, dass die genannten Nachteile überwunden werden. Eine weitere Aufgabe der Erfindung ist es eine nachhaltige und umweltfreundliche Vorrichtung sowie ein entsprechendes Verfahren anzugeben.

Die Lösung der Aufgabe erfolgt mit einer Vorrichtung sowie einem Verfahren mit den Merkmalen der unabhängigen Ansprüche. Besonders zu bevorzugende Ausführungen und Weiterbildungen der Erfindung sind Gegenstand der Unteransprüche.

Zur Lösung der Aufgabe lehrt die Erfindung ein Verfahren zum Schneiden eines beschichteten Werkstücks, insbesondere zum Schneiden von mit Korrosionsschutz beschichteten oder lackierten Metallstrukturen oder Metallblechen, wobei als Schneidmittel ein Fluidstrahl verwendet werden kann, der auf eine vorbestimmte Strahlgeschwindigkeit beschleunigt wird und mit vorbestimmter kinetischer Energie auf eine Oberfläche des zu schneidenden Werkstücks gestrahlt wird, wodurch eine Schnittkante in dem Werkstück erzeugt werden kann, die zur Oberfläche des Werkstücks im Wesentlichen senkrecht steht und wobei der Fluidstrahl aus einem Medium gebildet wird, indem eine Vielzahl von Partikeln eines Abrasivs dispergiert sein können. Das Abrasiv weist korrosionsschützende Eigenschaften auf, wobei während des Schneidens des Werkstücks auf dessen Schnittkante das Abrasiv als eine korrosionsschützende Beschichtung aufgetragen wird.

Hieraus ergibt sich der Vorteil, dass zeitgleich während des Beschneidens des beschichteten Werkstücks die Schnittkante unmittelbar beschichtet, somit versiegelt wird und vor Korrosionseffekten geschützt ist.

Weiterhin ist das Verfahren dadurch gekennzeichnet, dass der Fluidstrahl aus einer Fluidstrahlauslasseinrichtung im Wesentlichen senkrecht auf die Oberfläche des beschichteten Werkstücks gestrahlt wird, während zeitgleich entweder eine Vorschubbewegung des Fluidstrahls im Wesentlichen parallel zur Oberfläche des Werkstücks oder eine Vorschubbewegung des Werkstücks zum Fluidstrahl durchgeführt wird.

Darüber hinaus kann als Abrasiv ein Granulat, welches Zink, Aluminium und/oder eine Legierung daraus umfasst, in dem Medium eingebracht bzw. dispergiert werden. Durch die Verwendung dieser Materialien als Schneidmittel ergeben sich Vorteile dahingehend, dass die Schnittkante mit diesen Materialien beschichtet wird und somit die Beschichtung des Werkstücks wieder geschlossen wird mit demselben Material, mit dem das Werkstück ursprünglich beschichtet war.

Darüber hinaus kann ein Abrasiv, das einen Schneidzusatz und einen Beschichtungszusatz umfasst, in dem Medium eingebracht bzw. dispergiert sein. Durch die Verwendung eines Gemisches aus Schneidzusatz und Beschichtungszusatz als Abrasiv bietet sich der Vorteil, dass zum einen die Schneidkraft des Schneidmittels erhöht wird und gleichzeitig eine korrosionshemmende Beschichtung realisierbar ist.

Außerdem kann der Schneidzusatz ein Granulat aus Korund, keramischen Material, Quarzsand und/oder Vulkangestein umfassen.

Weiterhin kann der Beschichtungszusatz ein Granulat aus Zink, Aluminium, Nickel, Bronze, ein Oxid dieser Materialien und/oder eine Legierung dieser Materialien umfassen.

Darüber hinaus kann als Abrasiv ein Granulat verwendet werden, bei dem ein Schneidzusatz von einem Beschichtungszusatz zumindest abschnittsweise umgeben wird. Der Schneidzusatz kann dabei als ein Granulat aus Korund, keramischen Material, Quarzsand und/oder Vulkangestein ausgebildet sein und der Beschichtungszusatz als eine Ummantelung oder Umhüllung, die aus Zink, Aluminium, Nickel, Bronze, ein Oxid dieser Materialien und/oder eine Legierung dieser Materialien ausgebildet sein, die den Schneidzusatz zumindest abschnittsweise umfasst. Durch die Ummantelung des Schneidzusatzes aus Korund bzw. keramischen Material mit einem Beschichtungszusatz wie beispielsweise Zink wird der korrosionsschützende Effekt verstärkt, wobei sich eine homogenere Schutzschicht an der Schneidkante des Werkstücks bildet. Ein weiterer Vorteil ist darin zu sehen, dass bei der Abtragearbeit während des Schneidens des Werkstücks überwiegend der Beschichtungszusatz als erstes auf das Werkstück auftrifft und somit nicht wie bei einem Abrasiv mit einem Gemisch aus getrennten Scheidzusatz-Partikeln und Beschichtungszusatz-Partikel, ein zufällig nachfolgendes Schneidzusatz-Partikel einen bereits beschichteten Bereich der Schneidkante trifft und dadurch die aufgetragene Schicht wieder zerstört.

Zudem kann das den Fluidstrahl bildende Medium in flüssigem und/oder gasförmigem Aggregatzustand vorliegen.

Weiterhin kann das Medium, welches den Fluidstrahl bildet, insbesondere Wasser, dünnflüssiges Mineralöl, Petroleum und/oder Lösungsmittel bzw. Lösemittel, insbesondere Isopropanol umfassen.

Zusätzlich kann in einem weiteren Verfahrensschritt das Schneidmittel nach und/oder während des Schneidprozesses aufgefangen und zu einer Trenneinrichtung geführt werden, wobei das Abrasiv sowie abgetragene Materialrückstände, insbesondere Späne, des Werkstücks von dem Medium getrennt werden und anschließend das Medium sowie das Abrasiv für einen nachfolgenden Schneideprozess wiederverwendet werden. Durch Wiederverwenden des Granulats in einem geregelten Kreislauf kann, insbesondere bei der Verwendung von Aluminium und/oder Zink als Abrasivzusatz, ein nachhaltiges und wirtschaftliches Schneideverfahren erzielt werden.

In einem weiteren Aspekt betrifft die Erfindung ein Schneidmittel zur Verwendung in einem Verfahren nach zumindest einem der vorhergehenden Ansprüche, dadurch gekennzeichnet, dass das Schneidmittel zumindest einen Beschichtungszusatz umfasst.

Weiterhin kann das Schneidmittel zusätzlich einen Schneidzusatz umfassen.

Weiterhin kann das Schneidmittel dadurch gekennzeichnet sein, dass der Schneidzusatz ein Granulat aus Korund, keramischen Material, Quarzsand und/oder Vulkangestein umfasst.

Zudem kann der Beschichtungszusatz ein Granulat aus Zink, Aluminium, Nickel, Bronze, ein Oxid dieser Materialien und/oder eine Legierung dieser Materialien umfassen.

Darüber hinaus kann das Schneidmittel als Abrasiv ein Granulat umfassen, wobei ein Schneidzusatz von einem Beschichtungszusatz zumindest abschnittsweise umgeben wird.

In einem weiteren Aspekt betrifft die Erfindung die Verwendung eines Schneidmittels zum Schneiden eines beschichteten Werkstücks nach Anspruch 12, insbesondere zum Schneiden von mit Korrosionsschutz beschichteten oder lackierten Metallstrukturen oder Metallblechen, mit einem Speicher, zum Speichern eines Mediums, einer Mischkammer, in die das Medium aus dem Speicher einführbar ist, wobei in der Mischkammer dem Medium ein Abrasiv beimischbar ist, zum Erzeugen eines Fluidstrahls, einer Fluidstrahlauslasseinrichtung, zum Auslassen des Fluidstrahls, der als Schneidmittel mit vorbestimmter kinetischer Energie auf eine Oberfläche des zu schneidenden, beschichteten Werkstücks strahlbar ist. Weiterhin kann das Abrasiv korrosionsschützende Eigenschaften aufweisen, wobei während des Schneidens des Werkstückes auf dessen Schnittkante das Abrasiv als eine korrosionsschützende Beschichtung auftragbar sein kann.

Darüber hinaus kann eine Auffangeinrichtung vorgesehen sein, zum Auffangen des Fluidstrahls, der aus dem Werkstück austritt.

Zusätzlich oder alternativ kann eine Trenneinrichtung, zum Trennen zumindest vorbestimmter Teile des Abrasivs sowie zum Trennen von abgetragenen Materialrückständen des Werkstücks von dem Medium vorgesehen sein.

Im Folgenden wird die Erfindung anhand der Figurenbeschreibung näher erläutert. Es zeigen in schematischer Darstellung:
- Figur 1: den Aufbau einer erfindungsgemäßen Vorrichtung gemäß einer ersten Ausführungsform und
- Figur 2: den Aufbau einer erfindungsgemäßen Vorrichtung gemäß einer zweiten Ausführungsform.

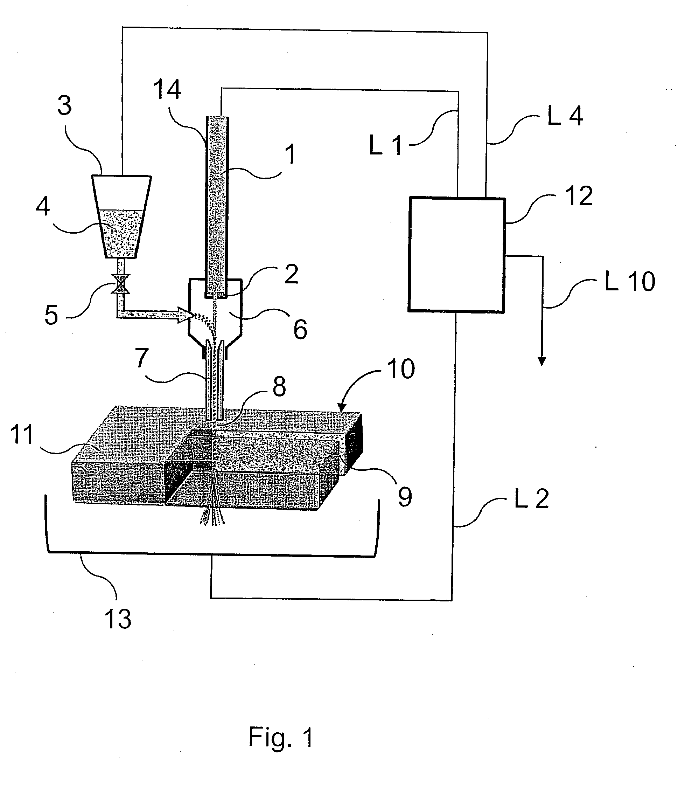

Nachfolgend soll mit Bezug zur Figur 1 der prinzipielle Aufbau der erfindungsgemäßen Vorrichtung erläutert werden. Das Hochdruck-Wasserstrahlschneiden ist eine moderne Form der Schneidetechnik. Ein druckbeaufschlagtes Medium 1, insbesondere Wasser, wird aus einem Behälter bzw. Speicher 14 über eine Düse 2 beispielsweise aus Saphir, Rubin und/oder Diamant auf eine vorbestimmte Geschwindigkeit beschleunigt und in eine Mischkammer 6 geleitet. In der Mischkammer 6 wird dem Fluid, das aus der Düse 2 strahlt, über eine seitliche Zuführung ein Abrasiv 4 beigemischt, das in einem Abrasiv-Behälter 3 gelagert wird. Die Konzentration von Abrasiv 4 im Strahl wird über eine Dosiereinrichtung 5 geregelt oder gesteuert. In der Mischkammer 6 herrscht ein Unterdruck, so dass das Abrasiv 4 durch den Venturieffekt in das den Strahl bildende Medium 1 gesaugt wird. Das Gemisch aus Medium 1, Abrasiv 4 sowie Luft wird in einer nachfolgenden Fokussierdüse 7, auch Schneide- bzw.

Abrasivdüse 7 genannt, gebündelt und mit einer vorbestimmten Geschwindigkeit auf die Materialoberfläche 11 eines zu bearbeitenden Werkstücks 10 gestrahlt. Nach dem Austritt aus der Fokussierdüse 7 trifft der Fluidstrahl 8 auf das zu bearbeitender Werkstück 10. Im Folgenden wird die Fokussierdüse 7 auch als Fluidstrahlauslasseinrichtung 7 bezeichnet. Die vorbestimmte Geschwindigkeit des Fluidstrahls 8 liegt dabei im Bereich von 0,5facher bis 3facher Schallgeschwindigkeit, bevorzugt im Bereich von einfacher bis zweifacher Schallgeschwindigkeit und besonders bevorzugt beträgt die vorbestimmte Geschwindigkeit ca. das 1,5fache der Schallgeschwindigkeit.

Der Speicher 14 kann als Druckspeicher ausgebildet sein, wobei das darin befindliche Medium 1 mit Druck beaufschlagt wird. Durch den Druck wird das Medium 1 beim Austritt aus der Fluidauslasseinrichtung 7 auf die vorbestimmte Geschwindigkeit beschleunigt.

Durch die Beimengung des Abrasivs 4 ist es möglich, die Schneidleistung um ein Vielfaches zu verbessern, so dass auch härtere und dickere Materialien geschnitten werden können. Eine besonders geeignete Schneidleistung wird durch Beimengung von Grant oder Korund erzielt. Alternativ kann anstatt Grant oder Korund ein korrosionsschützendes Abrasiv 4, wie beispielsweise Zink oder Aluminiumgranulat, verwendet werden. Das auf die vorbestimmte Geschwindigkeit beschleunigte Gemisch soll im Folgenden als Schneidmittel bezeichnet werden. Das Schneidmittel wird also gebündelt als Fluidstrahl 8 aus einer Fluidstrahlauslasseinrichtung 7 ausgestrahlt und trifft mit einer vorbestimmten kinetischen Energie auf die Oberfläche 11 eines Werkstücks 10 auf. Diese kinetische Energie wird in Abtragearbeit umgewandelt, wobei durch Mikroerosion das Material des Werkstücks 10 durchtrennt wird. Dabei bildet sich in dem Werkstück 10 eine Schnittkante 9 aus. Im Sinne der Erfindung ist die Schnittkante 9 auch als Schnittfläche zu verstehen, die in dem Werkstück 10 entsteht und sich über zumindest einen Abschnitt der Dicke oder über die gesamte Dicke des Werkstücks 10 erstreckt. Im Allgemeinen handelt es sich bei den zu schneidenden Werkstücken um dünne Bleche, so dass die Schnittfläche klein ausfällt und folglich der Einfachheit halber von einer Schnittkante 9 gesprochen werden soll.

Die genannten Nichteisen-Metallpartikel haben die Eigenschaft, sich bei der Abtragearbeit teilweise abzureiben und dadurch an der frei werdenden Schnittkante 9 anzuheften. Auf diese Weise entsteht eine weitgehend homogene Beschichtung, die als Korrosionsschutz an der die Schnittkante 9 bildenden Schnittfläche dient.

Wie eingangs beschrieben, handelt es sich bei dem zu bearbeitenden Werkstück 10 um ein vorbeschichtetes Bauteil. In der Fahrzeugtechnik werden verzinkte Bauteile, welche die Karosserie bilden bzw. die Rohkarosserie als Ganzes, mittels kathodischer Tauchlackierung beschichtet. Bei der Verwendung von Zink als Abrasiv 4 kann folglich an der Schnittkante 9 eine Beschichtung mit dem gleichen Material wie die Ursprungsbeschichtung des Bauteils realisiert werden.

Nach dem Durchtrennen des Werkstücks 10 kann der Fluidstrahl 8 mit Hilfe einer Auffangeinrichtung 13 aufgefangen werden. Beispielhaft und nicht einschränkend ist in Figur 1 die Auffangeinrichtung 13 als eine Wanne dargestellt, die auf einer Seite des Werkstücks 10 angeordnet ist, die der Fluidstrahlauslasseinrichtung 7 gegenüberliegt. Der Fluidstrahl 8, d.h. das Gemisch aus Medium 1, Abrasiv 4 sowie aus Materialrückständen des Werkstücks 10 wird in der Auffangeinrichtung 13 gesammelt. Diese Auffangvorrichtung 13 ist auch dazu geeignet, die kinetische Energie des Fluidstrahls 8 zu absorbieren. Über eine Zuführleitung L2 wird das gesammelte Gemisch aus der Auffangeinrichtung 13 einer Trenneinrichtung 12 zugeführt. In der Trenneinrichtung 12 werden die Materialrückstände, im Allgemeinen handelt es sich dabei um Eisenpartikel bzw. Späne, herausgefiltert, wobei sich als Filterung bzw. Trennung eine magnetische Abscheidung besonders eignet. Die Materialrückstände sowie das getrennte Abrasiv 4 werden über die Abführleitung L10 aus dem Kreislaufsystem ausgeschieden. Darüber hinaus wird in der Trenneinrichtung 12 das Abrasiv 4 von dem Medium 1 getrennt. Über die Leitung L1 wird das Medium 1 zurückgeführt in den Speicher 14, aus dem es dann über die Düse 2 wieder in die Mischkammer 6 überführt wird. Das Abrasiv 4 wird über die Leitung L4 in den Abrasivbehälter 3 überführt und dann wiederum über die Dosiereinrichtung 5 in der Mischkammer 6 dem Strahl aus Medium 1 zugemischt. Dadurch kann das Abrasiv 4 und das Medium 1 mehrfach über diesen geregelten Kreislauf verwendet werden.

Abgesehen von der oben beschriebenen, magnetischen Abscheidung können auch geeignete, hintereinander geschaltete Filtervorrichtungen in der Trennvorrichtung 12 Verwendung finden, um die Bestandteile des aufgefangenen Fluidstrahls 8 bzw. nicht mehr verwendbares Abrasiv voneinander zu trennen.

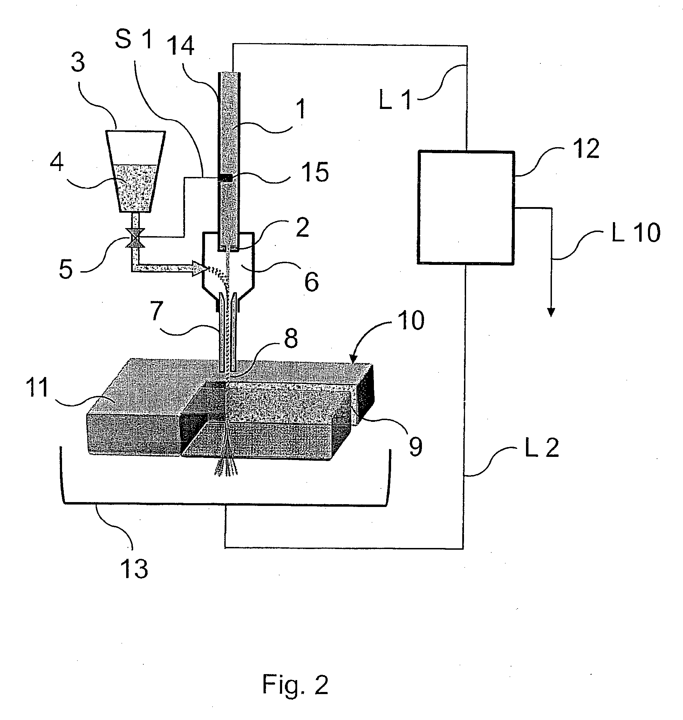

Im Folgenden soll der Aufbau der erfindungsgemäßen Vorrichtung gemäß einer zweiten Ausführungsform der Erfindung anhand der Figur 2 erläutert werden. Gleiche Bezugszeichen wie in Figur 1 bezeichnen dabei gleiche Bauteile. Der prinzipielle Aufbau der zweiten Ausführungsform entspricht im Wesentlichen dem Aufbau der in Figur 1 dargestellten ersten Ausführungsform, so dass im Folgenden nur die Unterschiede erläutert werden.

Bei der zweiten Ausführungsform werden in der Trenneinrichtung 12 abgetragene Materialrückstände des Werkstücks 10 sowie bestimmte Teile des Abrasivs 4 von dem Medium 1 getrennt und über die Leitung L10 abgeführt. Aus dem Medium 1 werden jedoch nur solche Teile des Abrasivs 4 abgeführt, die für eine Wiederverwendung in einem nachfolgenden Schneidprozess unbrauchbar sind. Durch mechanische Reibung des Abrasiv 4 an der Schnittkante 9 nutzen sich die einzelnen Abrasiv-Partikel ab und Erfahren eine Schrumpfung. Dies gilt sowohl für den Schneidzusatz wie auch für den Beschichtungszusatz. Sobald die Abrasiv-Partikel unter eine vorbestimmte Partikel-Größe geschrumpft sind eignen sie sich nicht mehr dazu, einen Schneideffekt in dem Werkstück 10 zu realisieren bzw. einen ausreichenden Beschichtungseffekt an der Schnittkante 9 sicherzustellen. Diese Teile des Abrasivs 4 werden mit den Materialrückständen aus dem Kreislauf über die Abführleitung L10 ausgeschieden.

Folglich wird Medium 1 mit darin enthaltenem Rest-Abrasiv über die Leitung L1 zurück in den Speicher 14 geführt. In diesem Speicher 14 befindet sich somit nicht mehr ausschließlich reines Medium 1, sondern ein Gemisch aus Medium 1 und Abrasiv 4. Die Konzentration dieses Gemisches wird mit einem Sensor 15 erfasst, der ein Signal S1 ausgibt. Das Signal S1 wird an die Dosiereinrichtung 5 übermittelt. Auf Basis des Signals S1 wird mit der Dosiereinrichtung 5 die Beimengung von Abrasiv 4 aus dem Abrasiv-Behälter 3 in die Mischkammer 6 gesteuert oder geregelt, so dass in dem Fluidstrahl 8 ein vorbestimmtes Gemisch von Medium 1 und Abrasiv 4 vorherrscht. Dabei wird aus dem Abrasiv-Behälter 3 stets neues, unverbrauchtes Abrasiv 4 in den Fluidstrahl 8 gefördert.

Bezug nehmend auf Figur 1 sowie den oben beschriebenen Aufbau der erfindungsgemäßen Vorrichtung soll im Folgenden das erfindungsgemäße Verfahren anhand von zwei Ausführungsformen erläutert werden. Ausgangspunkt des Verfahrens ist die Positionierung eines mit Korrosionsschutz beschichteten oder lackierten Werkstücks, insbesondere eines Metallblechs in eine vorbestimmte Position, in der es mit dem Fluidstrahl 8 bestrahlt werden kann. Dabei wird aus der Schneidevorrichtung ein Schneidmittel in Form eines Fluidstrahls 8 ausgestoßen, der auf die Oberfläche 11 des Werkstücks 10 geschleudert wird. In diesem Fluidstrahl 8 sind eine Vielzahl von Partikeln eines Abrasivs 4 dispergiert. Durch Verfahren des Fluidstrahls 8 entlang, d.h. im Wesentlichen Parallel zu der Oberfläche 11 des Werkstücks kann eine Schnittkante 9 in dem Werkstück 10 erzeugt werden. Der Fluidstrahl 8 ist dabei so ausgerichtet, dass er im Wesentlichen senkrecht auf die Oberfläche 11 des Werkstücks 10 auftritt. Dabei wird als Abrasiv 4 ein korrosionsschützendes Material, insbesondere Zink, Aluminium oder eine Mischung aus den beiden Materialien verwendet, mit dem Ziel das beschichtete Bauteil 10 mit dem Fluidstrahl 8 zu schneiden, wobei gleichzeitig eine Beschichtung der Schnittkante 9 erfolgt.

Vorteilhafterweise muss an der Schnittfläche bzw. Schnittkante 9 keine vollständige, flächendeckende Beschichtung realisiert werden, denn auch eine nur teilweise bzw. poröse Beschichtung bildet eine elektrolytische Opfer-Fernwirkung. Dadurch kann als Beschichtung ein unedles Material verwendet werden, das sich durch Auflösen opfert.

In einer weiteren Ausführungsform des vorliegenden erfinderischen Verfahrens kann das Abrasiv 4 ein Gemisch aus mindestens einem Schneidzusatz und mindestens einem Beschichtungszusatz umfassen. Diese Ausführungsform bietet den Vorteil, dass durch den Schneidzusatz eine besonders große Schneidwirkung erzielt wird, so dass auch dicke und somit resistentere, d.h. härtere Materialien durchtrennt werden können. Als Schneidzusatz eignet sich hier insbesondere die Beimischung von Korund, Grant, einem keramischen Material, Quarzsand und/oder Vulkangestein. Diese irdenen, nicht-metallischen Materialien verbessern die Mikroerosionswirkung, die der Fluidstrahl 8 auf der Oberfläche 11 erzeugt. Wie auch in der ersten Ausführungsform können als Beschichtungszusatz Zink, Aluminium, Nickel, Bronze bzw. anorganische und/oder andere metallische Beschichtungszusätze verwendet werden. Bei der Beschichtung ergeben sich zwei vorteilhafte Möglichkeiten, nämlich als Beschichtungsmaterial für die Schnittkante 9 das Material zu wählen, mit dem das Werkstück ursprünglich beschichtet war. Alternativ hierzu kann jedoch auch ein unedles Material verwendet werden, das in der Spannungsreihe unedler oder edler als die Beschichtung des Werkstücks und jedoch stets unedler als das Grundmaterial des Werkstücks selbst ist. Dadurch kann eine Opferbeschichtung auf der Schnittkante 9 erzeugt werden, die bei Eintreten von Korrosion als erstes oxidiert und somit das Grundmaterial sowie die ursprüngliche Beschichtung des Werkstücks zunächst vor Korrosion schützt. Eine solche Opferbeschichtung kann dabei, wie bereits oben erwähnt, als poröse, nicht geschlossene Beschichtung realisiert werden.

Das Mischverhältnis in dem Abrasiv 4 gemäß der zweiten Ausführungsform des erfinderischen Verfahrens kann in Abhängigkeit von Material und Beschichtung in einem Bereich von 3 % bis 97 % Beschichtungszusatz und 97 % bis 3 % Schneidzusatz liegen.

In beiden Ausführungsformen des erfindungsgemäßen Verfahrens kann der Fluidstrahl 8 mittels einer Auffangvorrichtung 13 aufgefangen werden und über eine Trennvorrichtung 12 in seine Bestandteile, d.h. Medium 1, Abrasiv 4 und Werkstoffrückstände gefiltert werden, um anschließend wieder als Ausgangsmaterial verwendet zu werden.

In einer weiteren Ausführungsform des Verfahrens werden in der Trenneinrichtung 12 abgetragene Materialrückstände des Werkstücks 10 sowie bestimmte Teile des Abrasivs 4 von dem Medium 1 getrennt und über die Leitung L10 abgeführt. Aus dem Medium 1 werden jedoch nur solche Teile des Abrasivs 4 abgeführt, die für eine Wiederverwendung in einem nachfolgenden Schneidprozess unbrauchbar sind. Durch mechanische Reibung des Abrasiv 4 an der Schnittkante 9 nutzen sich die einzelnen Abrasiv-Partikel ab und Erfahren eine Schrumpfung. Dies gilt sowohl für den Schneidzusatz wie auch für den Beschichtungszusatz. Sobald die Abrasiv-Partikel unter eine vorbestimmte Partikel-Größe geschrumpft sind eignen sie sich nicht mehr dazu, einen Schneideffekt in dem Werkstück 10 zu realisieren bzw. einen ausreichenden Beschichtungseffekt an der Schnittkante 9 sicherzustellen. Diese Teile des Abrasivs 4 werden mit den Materialrückständen aus dem Kreislauf über die Abführleitung L10 ausgeschieden.

Während des Strahlschneidens wird das beeinflusste Werkstück 10 unwillkürlich mit Wasser bzw. Medium 1 bespritzt. Um eine weiterschreitende Korrosion zu vermeiden, muss das Bauteil bzw. Werkstück 10 unmittelbar getrocknet und gegebenenfalls gereinigt werden. Zur Vermeidung dieser Nachteile kann auch ein wasserfreies Medium, insbesondere Petroleum, ein dünnflüssiges Mineralöl und/oder ein geeignetes Lösungsmittel bzw. Lösemittel verwendet werden. Dadurch kann bereits beim Herstellungsprozess die Gefahr der Korrosion reduziert werden.

Der Schutzbereich der Erfindung wird durch die Patentansprüche definiert.

## Patentansprüche

1. Verfahren zum Schneiden eines beschichteten Werkstücks (10), insbesondere zum Schneiden von mit Korrosionsschutz beschichteten oder lackierten Metallstrukturen oder Metallblechen, wobei als Schneidmittel ein Fluidstrahl (8) verwendet wird, der auf eine vorbestimmte Strahlgeschwindigkeit beschleunigt wird und mit vorbestimmter kinetischer Energie auf eine Oberfläche (11) des zu schneidenden Werkstück (10) gestrahlt wird, wodurch eine Schnittkante (9) in dem Werkstück (10) erzeugt wird, die zur Oberfläche (11) des Werkstücks (10) im Wesentlichen senkrecht steht und wobei der Fluidstrahl (8) aus einem Medium (1) gebildet wird, in dem eine Vielzahl von Partikel eines Abrasivs (4) dispergiert sind,
**dadurch gekennzeichnet, dass** das Abrasiv (4) korrosionsschützende Eigenschaften aufweist, und während des Schneidens des Werkstückes (10) auf dessen Schnittkante (9) das Abrasiv (4) als eine korrosionsschützende Beschichtung aufgetragen wird.

2. Verfahren nach Anspruch 1, **dadurch gekennzeichnet, dass** der Fluidstrahl (8) aus einer Fluidstrahlauslasseinrichtung (7) im Wesentlichen senkrecht auf die Oberfläche (11) des beschichteten Werkstücks (10) gestrahlt wird, während zeitgleich entweder eine Vorschubbewegung des Fluidstrahls (8) im Wesentlichen parallel zur Oberfläche (11) des Werkstücks oder eine Vorschubbewegung des Werkstücks (10) zum Fluidstrahl (8) durchgeführt wird.

3. Verfahren nach einem der vorhergehenden Ansprüche, **dadurch gekennzeichnet, dass** als Abrasiv (4) ein Granulat, welches Zink, Aluminium und/oder eine Legierung daraus umfasst, in dem Medium (1) eingebracht wird.

4. Verfahren nach einem der Ansprüche 1 oder 2, **dadurch gekennzeichnet, dass**
ein Abrasiv (4), das einen Schneidzusatz und einen Beschichtungszusatz umfasst, in dem Medium (1) eingebracht wird.

5. Verfahren nach Anspruch 4, **dadurch gekennzeichnet, dass**
der Schneidzusatz ein Granulat aus Korund, keramischen Material, Quarzsand und/oder Vulkangestein umfasst.

6. Verfahren nach Anspruch 4 oder 5, **dadurch gekennzeichnet, dass**
der Beschichtungszusatz ein Granulat aus Zink, Aluminium, Nickel, Bronze, ein Oxid dieser Materialien und/oder eine Legierung dieser Materialien umfasst.

7. Verfahren nach einem der Ansprüche 3 bis 6, **dadurch gekennzeichnet, dass**
als Abrasiv (4) ein Granulat verwendet wird, wobei ein Schneidzusatz von einem Beschichtungszusatz zumindest abschnittsweise umgeben wird.

8. Verfahren nach einem der vorhergehenden Ansprüche, **dadurch gekennzeichnet, dass**
das den Fluidstrahl (8) bildende Medium (1) in flüssigen und/oder gasförmigen Aggregatzustand vorliegt.

9. Verfahren nach einem der vorhergehenden Ansprüche, **dadurch gekennzeichnet, dass**
das Medium (1), welches den Fluidstrahl (8) bildet, insbesondere Wasser, dünnflüssiges Mineralöl, Petroleum und/oder Lösungsmittel, insbesondere Isopropanol umfasst.

10. Verfahren nach einem der vorhergehenden Ansprüche, **dadurch gekennzeichnet, dass**
das Schneidemittel nach und/oder während dem Schneideprozess aufgefangen wird und zu einer Trenneinrichtung (12) geleitet wird, wobei das Abrasiv (4) sowie abgetragene Materialrückstände des Werkstücks (10) von dem Medium (1) getrennt werden und anschließend das Medium (1) sowie das Abrasiv (4) für einen nachfolgenden Schneideprozess wiederverwendet werden.

11. Verfahren nach einem der vorhergehenden Ansprüche 1 bis 9, **dadurch gekennzeichnet, dass**
das Schneidemittel nach und/oder während dem Schneideprozess aufgefangen wird und zu einer Trenneinrichtung (12) geleitet wird, wobei vorbestimmte Teile des Abrasivs (4) sowie abgetragene Materialrückstände des Werkstücks (10) von dem Medium (1) getrennt werden und anschließend das Medium (1) sowie das darin verbliebene Abrasiv (4) für einen nachfolgenden Schneideprozess wiederverwendet werden.

12. Verwendung eines Schneidmittels, das zumindest einen Beschichtungszusatz und einen Schneidzusatz umfasst, in einer Vorrichtung zum Schneiden eines beschichteten Werkstücks (10), insbesondere zum Schneiden von mit Korrosionsschutz beschichteten oder lackierten Metallstrukturen oder Metallblechen, mit:
- einem Speicher (14), zum Speichern eines Mediums (1),
- einer Mischkammer (6), in die das Medium (1) aus dem Speicher (14) einführbar ist, wobei in der Mischkammer (6) dem Medium (1) ein Abrasiv (4) beimischbar ist, zum Erzeugen eines Fluidstrahls (8),
- einer Fluidstrahlauslasseinrichtung (7), zum Auslassen des Fluidstrahls (8), der als Schneidmittel mit vorbestimmter kinetischer Energie auf eine Oberfläche (11) des zu schneidenden, beschichteten Werkstücks (10) strahlbar ist,
**dadurch gekennzeichnet, dass**
dass das Abrasiv (4) korrosionsschützende Eigenschaften aufweist, und während des Schneidens des Werkstückes (10) auf dessen Schnittkante (9) das Abrasiv (4) als eine korrosionsschützende Beschichtung auftragbar ist.

13. Verwendung nach Anspruch 12, **dadurch gekennzeichnet, dass** der Schneidzusatz ein Granulat aus Korund, keramischen Material, Quarzsand und/oder Vulkangestein umfasst.

14. Verwendung nach einem der Ansprüche 12 bis 13, **dadurch gekennzeichnet, dass**
der Beschichtungszusatz ein Granulat aus Zink, Aluminium, Nickel, Bronze, ein Oxid dieser Materialien und/oder eine Legierung dieser Materialien umfasst.

15. Verwendung nach einem der Ansprüche 12 bis 14, **dadurch gekennzeichnet, dass**
das Abrasiv (4) ein Granulat umfasst, wobei ein Schneidzusatz von einem Beschichtungszusatz zumindest abschnittsweise umgeben wird.

16. Verwendung nach einem der Ansprüche 12 bis 15, **dadurch gekennzeichnet, dass**
- die Vorrichtung eine Auffangeinrichtung (13) umfasst, zum Auffangen des Fluidstrahls (8), der aus dem Werkstück (10) austritt.

17. Verwendung nach einem der Ansprüche 12 bis 16, **dadurch gekennzeichnet, dass**
- die Vorrichtung eine Trenneinrichtung (12) umfass, zum Trennen zumindest vorbestimmter Teile des Abrasivs (4) sowie zum Trennen von abgetragenen Materialrückständen des Werkstücks (10) von dem Medium (1).

## Claims

1. A method of cutting a coated workpiece (10), especially for cutting metal structures or metal sheets painted or coated with anti-corrosive materials, wherein the cutting agent is a jet (8) of liquid accelerated to a set speed and directed with set kinetic energy against a surface (11) of the workpiece (10) for cutting, so that a cut edge (9) is produced in the workpiece (10) substantially at right angles to the surface (11) of the workpiece (10) and wherein the jet (8) is formed from a medium (1) in which a number of abrasive particles (4) are dispersed,
**characterised in that** the abrasive (4) has anti-corrosive properties and while the workpiece (10) is being cut the abrasive (4) is applied to the cut edge (9) in the form of an anti-corrosive coating.

2. A method according to claim 1, **characterised in that** the jet (8) is directed by a discharge device (7) substantially at right angles to the surface (11) of the coated workpiece (10), wherein the jet (8) is simultaneously moved substantially parallel to the surface (11) of the workpiece or the workpiece (10) is moved relative to the jet (8).

3. A method according to any of the preceding claims, **characterised in that** the abrasive (4) is a granulate comprising zinc, aluminium and/or an alloy thereof, introduced into the medium (1).

4. A method according to claim 1 or claim 2, **characterised in that** an abrasive (4) comprising a cutting additive and a coating additive is introduced into the medium (1).

5. A method according to claim 4, **characterised in that** the cutting additive is a granulate comprising corundum, ceramic material, silica sand and/or volcanic rock.

6. A method according to claim 4 or claim 5, **characterised in that** the coating additive is a granulate comprising zinc, aluminium, nickel, bronze, an oxide of said materials and/or an alloy of said materials.

7. A method according to any of claims 3 to 6, **characterised in that** the abrasive (4) is a granulate, wherein a cutting additive is surrounded, at least partly, by a coating additive.

8. A method according to any of the preceding claims, **characterised in that** the medium (1) constituting the jet (8) is in the form of a liquid and/or gaseous aggregate.

9. A method according to any of the preceding claims, **characterised in that** the medium (1) constituting the jet (8) comprises especially, low-viscosity mineral oil, rock oil and/or a solvent, especially isopropanol.

10. A method according to any of the preceding claims, **characterised in that** during and/or after the cutting process the cutting agent is collected and conveyed to a separating device (12), wherein the abrasive (4) and eroded residues of the workpiece (10) are separated from the medium (1), after which the medium (1) and the abrasive (4) are re-used in a subsequent cutting process.

11. A method according to any of the preceding claims, **characterised in that** during and/or after the cutting process the cutting agent is collected and conveyed to a separating device (12), wherein set parts of the abrasive (4) and eroded residues of the workpiece (10) are separated from the medium (1), after which the medium (1) and the remaining abrasive (4) therein are re-used for a subsequent cutting process.

12. Use of a cutting agent comprising at least one coating additive and one cutting additive in a device for cutting a coated workpiece (10), especially for cutting metal structures or metal sheets painted or coated with anticorrosives, comprising
- a reservoir (14) for storing a medium (1),
- a mixing chamber (6) into which the medium (1) can be introduced from the reservoir (14), wherein in the mixing chamber (6) an abrasive (4) can be added to the medium (1) in order to produce a jet of liquid (8),
- a device (7) for discharging the jet of liquid (8), which is in the form of a cutting agent having a set kinetic energy and directed against a surface (1) of the coated workpiece (10) for cutting,
**characterised in that**
the abrasive (4) has anti-corrosive properties and while the workpiece (10) is being cut, the abrasive (4) constituting an anti-corrosive coating can be applied to the cut edge (9).

13. Use according to claim 12, **characterised in that**
the cutting additive is a granulate comprising corundum, ceramic material, silica sand and/or volcanic rock.

14. Use according to claim 12 or 13, **characterised in that**
the coating additive is a granulate comprising zinc, aluminium, nickel, bronze, an oxide of said materials and/or an alloy of said materials.

15. Use according to any of claims 12 to 14, **characterised in that**
- the abrasive (4) comprises a granulate, wherein a cutting additive is at least partly surrounded by a coating additive.

16. Use according to any of claims 12 to 15, **characterised in that**
- the device comprises a collecting means (13) for collecting the jet (8) when it leaves the workpiece (10).

17. Use according to any of claims 12 to 16, **characterised in that**
- the device comprises a means (12) for separating at least set parts of the abrasive (4) and for separating eroded residues of the workpiece (10) from the medium (1).

## Revendications

1. Procédé pour découper une pièce usinée (10) revêtue en particulier pour découper des structures métalliques ou des tôles métalliques revêtues d'une protection anticorrosion ou vernies, selon lequel, entant que moyen de découpe on utilise un jet de fluide (8) qui est accéléré à une vitesse de jet prédéfinie et qui est projeté sur une surface (11) de la pièce usinée (10) à découper avec une énergie cinétique prédéfinie de façon à obtenir dans la pièce usinée (10) une arête de découpe (9) qui s'étend essentiellement perpendiculairement à la surface (11) de la pièce usinée (10), et, le jet de fluide (8) étant formé d'un milieu (1) dans lequel sont dispersées un ensemble de particules d'un abrasif (4),
**caractérisé en ce que**
l'abrasif (4) présente des propriétés de protection contre la corrosion, et pendant la découpe de la pièce usinée (10) l'abrasif (4) est appliqué sur son arête de découpe (9) entant que revêtement de protection anticorrosion.

2. Procédé conforme à la revendication 1,
**caractérisé en ce que**
le jet de fluide (8) est projeté à partir d'un dispositif de distribution d'un jet de fluide (7) essentiellement perpendiculairement à la surface (11) de la pièce usinée (10) recouverte, tandis que simultanément, soit un déplacement d'avancement du jet de fluide (8) essentiellement parallèlement à la surface (11) de la pièce usinée (10) ou un déplacement d'avancement de la pièce à usiner (10) par rapport au jet de fluide (8) est effectué.

3. Procédé conforme à l'une des revendications précédentes,
**caractérisé en ce qu'**
entant qu'abrasif (4) on ajoute dans le milieu (1) un granulat qui renferme du zinc, de l'aluminium et/ou un alliage de ces métaux.

4. Procédé conforme à l'une des revendications 1 et 2,
**caractérisé en ce qu'**
un abrasif (4) qui renferme un additif de découpe et un additif de revêtement est incorporé au milieu (1).

5. Procédé conforme à la revendication 4,
**caractérisé en ce que**
l'additif de découpe renferme un granulat en corindon, en matériau céramique, en sable de quartz, et/ou en roche vulcanisée.

6. Procédé conforme à la revendication 4 ou 5,
**caractérisé en ce que**
l'additif de revêtement renferme un granulat en zinc, aluminium, nickel, bronze, en un oxyde de ces métaux et/ou un alliage de ces métaux.

7. Procédé conforme à l'une des revendications 3 à 6,
**caractérisé en ce qu'**
entant qu'abrasif (4) on utilise un granulat, un additif de découpe étant entouré au moins par section par un additif de revêtement.

8. Procédé conforme à l'une des revendications précédentes,
**caractérisé en ce que**
le milieu (1) formant le jet de fluide (8) est présent à l'état d'amas liquide et/ ou gazeux.

9. Procédé conforme à l'une des revendications précédentes,
**caractérisé en ce que**
le milieu (1) qui forme le jet de fluide (8) renferme en particulier de l'eau, une huile minérale peu visqueuse, du pétrole et/ou un solvant, en particulier de l'isopropanol.

10. Procédé conforme à l'une des revendications précédentes,
**caractérisé en ce que**
l'agent de découpe est capté après et/ou pendant le procédé de découpe et est transféré vers un dispositif de séparation (12), l'abrasif (4) ainsi que les résidus du matériau de la pièce usinée (10) entrainés étant séparés du milieu (1), puis, le milieu (1) ainsi que l'abrasif (4) étant à nouveau utilisés pour un procédé de découpe ultérieur.

11. Procédé conforme à l'une des revendications précédentes 1 à 9,
**caractérisé en ce que**
l'agent de découpe est capté après et/ou pendant le processus de découpe et est transféré vers un dispositif de séparation (12), des parties prédéfinies de l'abrasif (4) ainsi que des résidus du matériau de la pièce usinée (10) entrainés étant séparés du milieu (1), puis le milieu (1) ainsi que l'abrasif (4) restant dans celui-ci étant à nouveau utilisés pour un procédé de découpe ultérieur.

12. Utilisation d'un agent de découpe qui renferme au moins un additif de revêtement et un additif de découpe, dans un dispositif de découpe d'une pièce usinée (10) revêtue, en particulier pour la découpe de structures métalliques ou de tôles métalliques revêtues d'une protection anticorrosion ou vernies comportant :
- un réservoir (14) pour stocker un milieu (1),
- une chambre de mélange (6) dans laquelle peut être introduit le milieu (1) provenant du réservoir (14), dans cette chambre de mélange (6), un abrasif (4) pouvant être mélangé au milieu (1) pour permettre d'obtenir un jet de fluide (8),
- un dispositif de distribution d'un jet de fluide (7) pour permettre la distribution du jet de fluide (8) pouvant être projeté entant que moyen de découpe ayant une énergie cinétique prédéfinie sur une surface (11) de la pièce usinée revêtue (10) à découper,
**caractérisée en ce que**
l'abrasif (4) présente des propriétés de protection anticorrosion, et pendant la découpe de la pièce usiner (10) l'abrasif (4) peut être appliqué sur les arêtes de découpe (9) de cette pièce sous la forme d'un revêtement de protection anticorrosion.

13. Utilisation conforme à la revendication 12,
**caractérisée en ce que**
l'additif de découpe est un granulat en corindon, en matériau céramique, en sable de quartz et/ou en roche vulcanisée.

14. Utilisation conforme à l'une des revendications 12 et 13,
**caractérisée en ce que**
l'additif de revêtement renferme un granulat en zinc, aluminium, nickel, bronze, un oxyde de ces métaux et/ou un alliage de ces métaux.

15. Utilisation conforme à l'une des revendications 12 à 14,
**caractérisée en ce que**
l'abrasif (4) renferme un granulat, un additif de découpe étant entouré au moins par section par un additif de revêtement.

16. Utilisation conforme à l'une des revendications 12 à 15,
**caractérisée en ce que**
le dispositif comporte un dispositif de captage (13) pour permettre de capter le jet de fluide (8) sortant de la pièce usinée (10).

17. Utilisation conforme à l'une des revendications 12 à 16,
**caractérisée en ce que**
le dispositif comporte un dispositif de séparation (12) pour permettre de séparer au moins des parties prédéfinies de l'abrasif (4) et de séparer des résidus du matériau de la pièce usinée (10) entrainés du milieu (1).
